# EUROPEAN PATENT APPLICATION

(11) **EP 2 184 151 A1**
(43) Date of publication of application: **12.05.2010**
(21) Application number: 07806774.1
(22) Date of filing: 05.09.2007
(51) Int. Cl.: B29C 45/14, B29C 45/26, F16J 15/00

(54) **PROCESS FOR PRODUCING SEAL**

(71) Applicant: NOK Corporation, Minato-ku Tokyo 105-8585 (JP)
(72) Inventor: HAYASHI, Takahiro, Fujisawa-shi Kanagawa 251-0042 (JP); KUROKI, Yuichi, Fujisawa-shi Kanagawa 251-0042 (JP)
(74) Representative: TBK-Patent
(86) International application number: PCT/JP2007/067332
(87) International publication number: WO 2009/031217

(57) **Abstract**

The invention provides a method for manufacturing a seal integrally provided with conducting members, the method capable of suppressing generation of burrs even if the conducting members have complicated structures, e.g., when the conducting members are laid on each other while displaced from each other.

In the method for manufacturing the seal provided with the plurality of FPCs 21, 22 and 23 laid on each other while displaced from each other, leakage preventing portions 31, 32, 33, and 34 for preventing leakage of a seal material from a cavity C are formed in a portion of a gap formed between the FPCs 21 and 23 and at portions of surfaces of the FPC 23 and FPC 22 before the FPCs 21, 22, and 23 are disposed in a mold. In this way, it is possible to prevent the leakage of the seal material in molding a seal member 11.

## Description

### TECHNICAL FIELD

The present invention relates to a method for manufacturing a seal integrally provided with flexible flat conducting members.

### BACKGROUND ART

There is a technique of using a seal integrally provided with flexible flat conducting members (such as FPCs and an FFCs) in a structure in which conducting members are drawn out of an inside of a sealed area. This seal can be manufactured by disposing the conducting members in a mold, charging a fluent seal material such as a rubber material into a cavity in the mold, and then curing the seal material. Here, if the conducting member has a simple shape and there is only one conducting member, it is possible to easily manufacture the seal while maintaining high adhesion between the seal member and the conducting member obtained by curing the seal material.

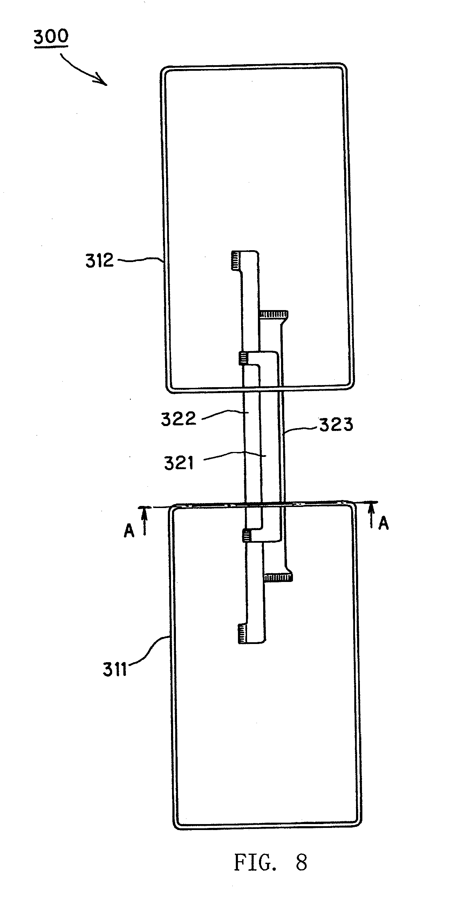

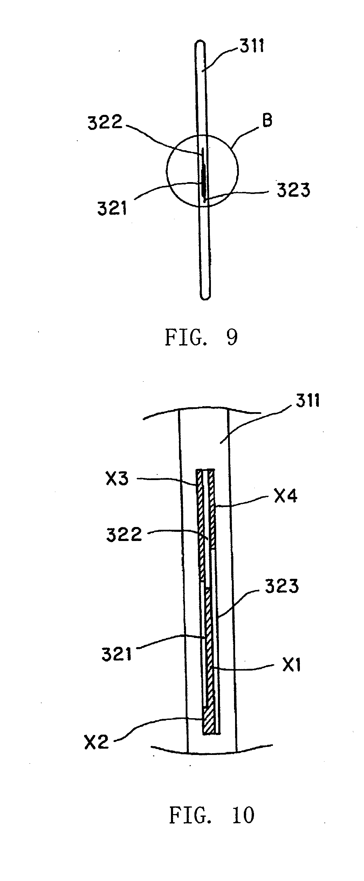

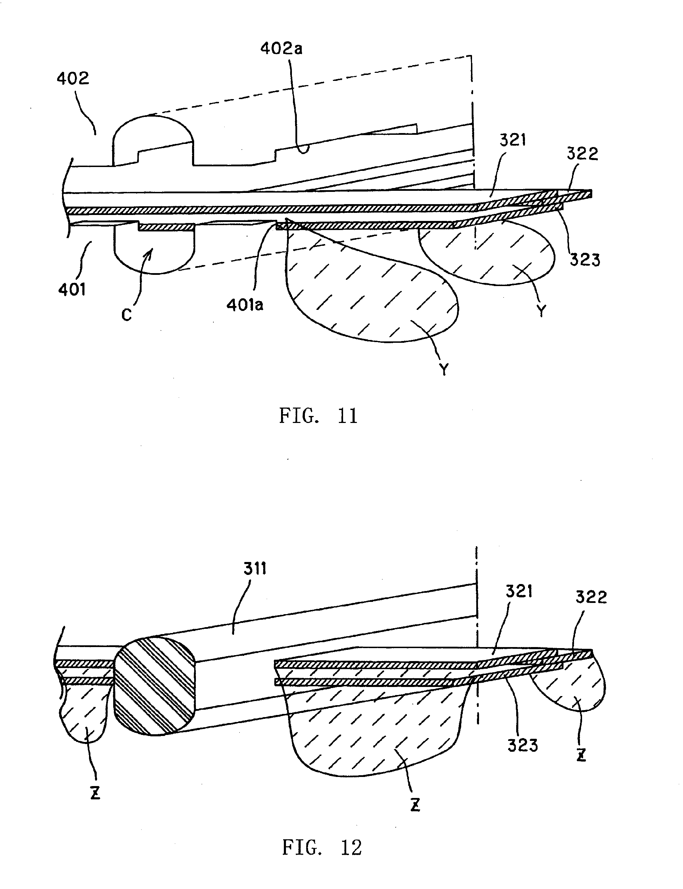

However, if the conducting member has a complicated shape or a plurality of conducting members are laid on each other while displaced from each other, it is difficult to easily manufacture the seal while maintaining high adhesion between the seal member and the conducting member. This point will be described below with reference to FIGS. 8 to 12. FIG. 8 is a plan view of a prior-art seal integrally provided with conducting members. FIG. 9 is a sectional view along a line A-A in FIG. 8. FIG. 10 is an enlarged view of a portion B in FIG. 9. FIG. 11 is a partially cutaway perspective view schematically showing a manner of molding of a prior-art seal member. FIG. 12 is a partially cutaway perspective view schematically showing a manner of the prior-art seal member after the molding.

The seal 300 shown in FIG. 8 is provided to a flip phone. In general, the flip phone is provided with a case on an operation side and a case on a display side with a hinge portion interposed therebetween. The two cases can be folded and extended about the hinge portion. The seal 300 includes two seal members 311 and 312 made up of rubber-like elastic bodies. One of the seal members 311 and 312 is disposed in the case on the operation side and the other is disposed in the case on the display side. These seal members 311 and 312 are integrally provided with three FPCs 321, 322, and 323. These three FPCs 321, 322, and 323 are laid on each other while displaced from each other.

Therefore, as can be seen from FIGS. 9 and 10, an adhesion portion between the FPCs 321, 322, and 323 and the seal member 311 has a complicated shape. Therefore, in a gap X1 between the FPC 321 and the FPC 323 and at steps X2, X3, and X4, the seal material leaks from the mold during molding to generate so-called burrs. Needless to say, the seal member 312 has the similar problems. Therefore, only the seal member 311 will be described in the following description.

Generation of the burrs will be described more specifically with reference to FIGS. 11 and 12. The mold (metal mold) for molding the seal member 311 is made up of a lower mold 401 and an upper mold 402. The lower mold 401 and the upper mold 402 are respectively provided with grooves 401a and 402a in which the FPCs 321, 322 and 323 are to be disposed. If mold matching is performed after the FPCs 321, 322 and 323 are disposed, the FPCs 321, 322 and 323 penetrate a cavity C for molding the seal member 311. FIG. 11 shows a state in which the FPCs 321, 322 and 323 are disposed in the lower mold 401 before the mold matching (before the upper mold 402 comes in contact with the lower mold 401).

If the mold matching is performed, the groove 401a formed in the lower mold 401 and the groove 402a formed in the upper mold 402 form a rectangular through hole. The FPCs 321, 322 and 323 are inserted through the through hole. In and at the above gap X1 and the steps X2, X3, and X4 shown in FIG. 10, gaps are formed in mold clamping. Therefore, when the seal material is charged into the cavity C, part of the seal material leaks from the gaps. Reference letters Y in FIG. 11 designate the leaking seal material.

As a result, when the mold is opened after the molding and a molded article is taken out, the molded article has the burrs Z as shown in FIG. 12. If the burrs Z are generated, the burrs Z not only require time and trouble to be removed but also cause improper charging of the seal material.

To eliminate the gaps formed by the steps X2, X3, and X4, steps may be provided to the grooves 401a and 402a in the lower mold 401 and the upper mold 402 as well. However, the FPCs are extremely thin in general. Therefore, high working accuracy is necessary for forming, in the grooves 401a and 402a, the steps that fit the FPCs 321, 322 and 323 laid on each other. Consequently, this method cannot completely prevent generation of the burrs, causes an increase in cost, and therefore is not the best measure. Moreover, this method cannot prevent generation of the burr due to the gap X1.

There are pieces of related art disclosed in Patent Documents 1 to 3.
Patent Document 1: Japanese Patent Application Laid-Open No. 5-165784
Patent Document 2: International Publication No. WO03/085793
Patent Document 3: Japanese Patent Application Laid-Open No. 2005-328003

### DISCLOSURE OF THE INVENTION

### PROBLEMS TO BE SOLVED BY THE INVENTION

It is an object of the present invention to provide a method for manufacturing a seal integrally provided with conducting members while suppressing generation of burrs even if the conducting members have complicated structures, e.g., when conducting members are laid on each other while displaced from each other.

### MEANS FOR SOLVING THE PROBLEMS

To achieve the above object, the present invention employs the following means.

In other words, according to the present invention, there is provided a method for manufacturing a seal integrally provided with conducting members by charging a seal material into a cavity in a mold with the flexible flat conducting members disposed in the mold, the plurality of conducting members being laid on each other while displaced from each other, wherein a leakage preventing portion for preventing leakage of the seal material from the cavity is formed in a portion of a gap formed between the conducting members not adjacent to each other before the conducting members are disposed in the mold.

According to the invention, it is possible to prevent the leakage of the seal material from the cavity with the leakage preventing portion.

The seal manufacturing method of the invention is a method for manufacturing a seal integrally provided with conducting members by charging a seal material into a cavity in a mold with the flexible flat conducting members disposed in the mold, the plurality of conducting members laid on each other while displaced from each other, wherein a leakage preventing portion for preventing leakage of the seal material from the cavity is formed at a portion of a surface of a portion of the given conducting member protruding away from any other conducting member before the conducting members are disposed in the mold.

According to the invention, it is possible to prevent the leakage of the seal material from the cavity with the leakage preventing portion.

According to the invention, there is provided a method for manufacturing a seal integrally provided with conducting members by charging a seal material into a cavity in a mold with the flexible flat conducting members disposed in the mold, the plurality of conducting members being laid on each other while displaced from each other, wherein leakage preventing portions for preventing leakage of the seal material from the cavity are respectively formed in a portion of a gap formed between the conducting members not adjacent to each other and at a portion of a surface of a portion of the given conducting member protruding away from any other conducting member before the conducting members are disposed in the mold and a shape formed by putting sections of the conducting members laid on each other and sections of the leakage preventing portions together in a direction perpendicular to a longitudinal direction of the conducting members is a rectangle.

According to the invention, it is possible to prevent the leakage of the seal material from the cavity with the leakage preventing portions. According to the invention, a shape of a through hole through which the conducting members are inserted from the cavity to the outside of the mold may be a rectangle and therefore it is possible to easily and accurately work the portion.

According to the invention, there is provided a method for manufacturing a seal integrally provided with a conducting member by charging a seal material into a cavity in a mold with the flexible flat conducting members disposed in the mold, the conducting member having an uneven surface, wherein a leakage preventing portion for preventing leakage of the seal material from the cavity is formed at a portion of a surface of the conducting member before the conducting member is disposed in the mold.

According to the invention, it is possible to prevent the leakage of the seal material from the cavity with the leakage preventing portion.

Preferable examples of the "flexible flat conducting member" in the invention are FPCs (flexible printed circuit boards) and FFCs (flexible flat cables).

### EFFECTS OF THE INVENTION

As described above, according to the invention, it is possible to suppress generation of the burrs.

### BRIEF DESCRIPTION OF THE DRAWINGS

FIG. 1 is a plan view of a seal integrally provided with conducting members according to an embodiment of the present invention.
FIG. 2 is a partially cutaway perspective view showing a state in which leakage preventing portions are formed on the conducting members in the seal according to the embodiment of the invention.
FIG. 3 is an explanatory view of a step of forming the leakage preventing portions in a method for manufacturing the seal according to the embodiment of the invention.
FIG. 4 is a partially cutaway perspective view schematically showing a manner of molding a seal member according to the embodiment of the invention.
FIG. 5 is a partially cutaway perspective view schematically showing a state after molding of the seal member according to the embodiment of the invention.
FIG. 6 is a schematic sectional view of a conducting member and showing a state in which leakage preventing portions are formed when a surface of a conducting member is uneven.
FIG. 7 is a plan view of a seal integrally provided with the conducting members according to the embodiment of the invention.
FIG. 8 is a plan view of a prior-art seal integrally provided with conducting members.
FIG. 9 is a sectional view along a line A-A in FIG. 8.
FIG. 10 is an enlarged view of a portion B in FIG. 9.
FIG. 11 is a partially cutaway perspective view schematically showing a manner of molding of a prior-art seal member.
FIG. 12 is a partially cutaway perspective view schematically showing a manner of the prior-art seal member after the molding.

### EXPLANATION OF REFERENCE NUMERALS

- 11, 12: seal member
- 13: grommet
- 21, 22, 23, 24, 25, 26, 27: FPC
- 24a, 24b: recessed portion
- 31, 32, 33, 34, 35, 36: leakage preventing portion
- 40: preforming mold
- 41: preforming lower mold
- 42: preforming upper mold
- 41a, 42a: groove
- 50: metal mold
- 51: lower mold
- 52: upper mold
- 51a, 52a: groove
- 100, 200: seal
- C: cavity

### BEST MODE FOR CARRYING OUT THE INVENTION

The best mode for carrying out the invention will be described below specifically based on an embodiment by using examples and with reference to the drawings. Dimensions, materials, shapes, and relative positions of component parts described in the embodiment are not intended to limit the scope of the invention unless otherwise specified.

### (Embodiment)

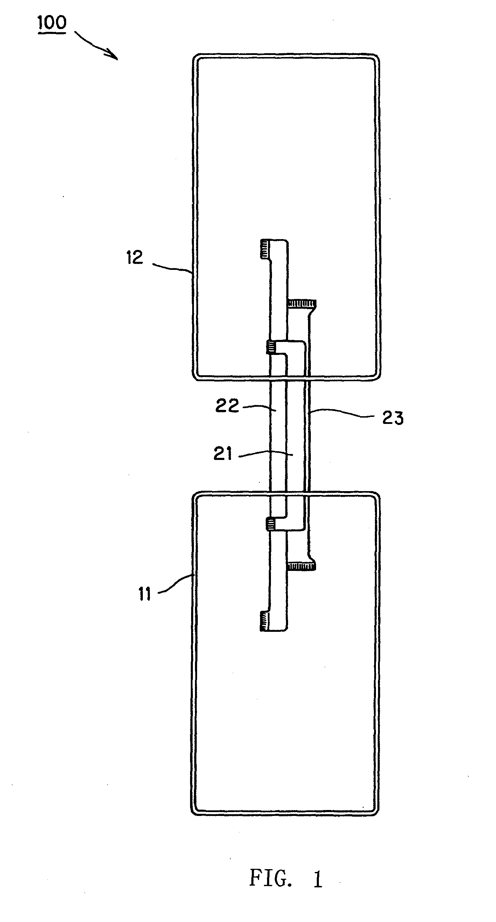

With reference to FIGS. 1 to 7, a seal manufacturing method according to the embodiment of the invention will be described.

### <Seal integrally provided with FPCs>

With reference to FIG. 1, the seal manufactured by a manufacturing method according to the present embodiment will be described. FIG. 1 is a plan view of the seal integrally provided with conducting members (FPCs) according to the embodiment of the invention.

The seal 100 manufactured by the manufacturing method according to the embodiment is provided to a flip phone. In general, the flip phone is provided with a case on an operation side and a case on a display side with a hinge portion interposed therebetween. The two cases can be folded and extended about the hinge portion. The seal 100 includes two seal members 11 and 12. One of the seal members 11 and 12 is disposed in the case on the operation side and the other is disposed in the case on the display side. These seal members 11 and 12 are integrally provided with three FPCs 21, 22, and 23. These three FPCs 21, 22, and 23 are laid on each other while displaced from each other.

### <Seal producing method>

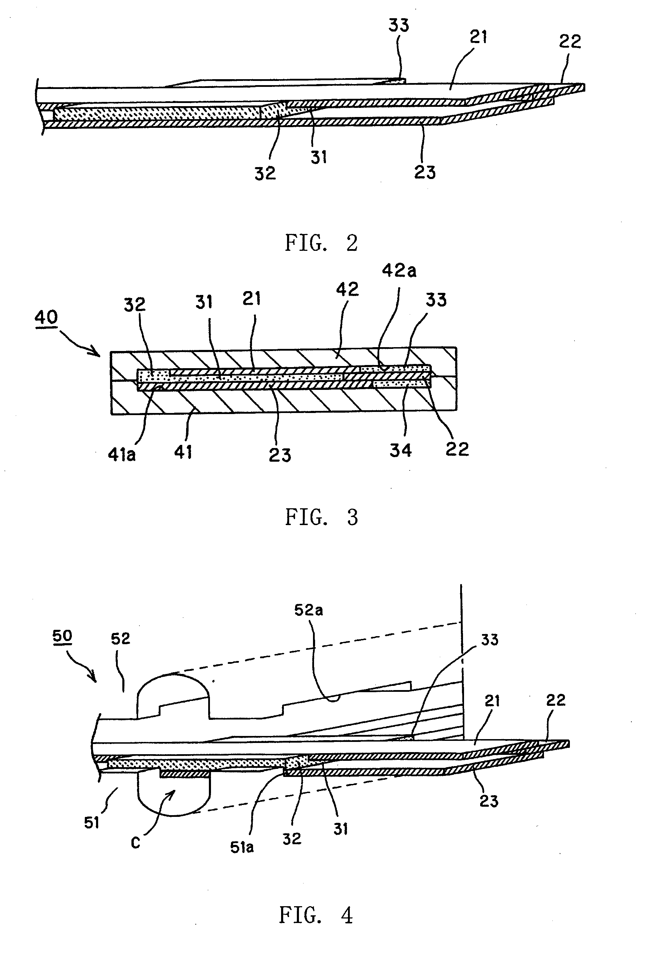

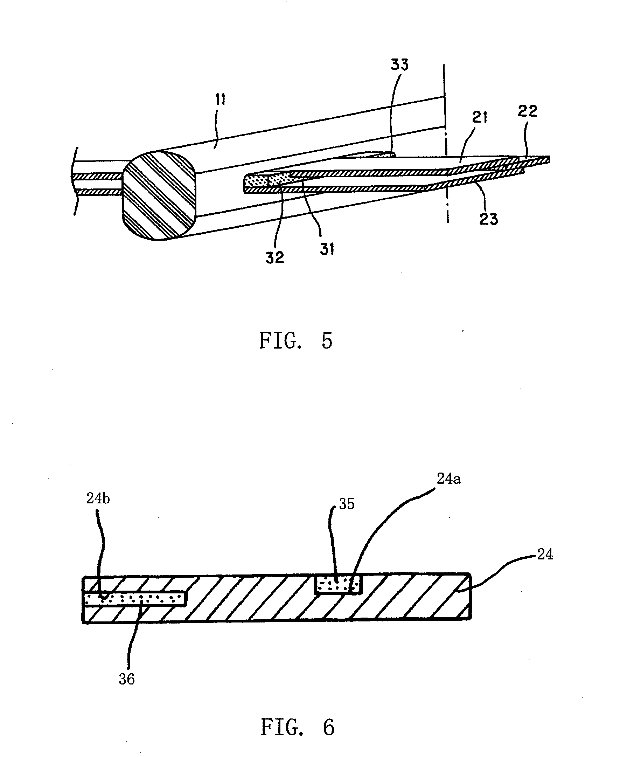

With reference especially to FIGS. 2 to 5, a seal manufacturing method according to the embodiment of the invention will be described. The seal manufacturing method according to the embodiment generally includes a step of forming leakage preventing portions on the FPCs and a step of molding the seal member. FIG. 2 is a partially cutaway perspective view showing a state in which the leakage preventing portions are formed on the conducting members (FPCs) in the seal according to the embodiment of the invention. FIG. 3 is an explanatory view of the step of forming the leakage preventing portions in the manufacturing method of the seal according to the embodiment of the invention. FIG. 3 is a schematic sectional view (schematic sectional view of a preforming mold, the FPCs, and the leakage preventing portions) perpendicular to a longitudinal direction of the FPCs at portions where the leakage preventing portions are formed. FIG. 4 is a partially cutaway perspective view schematically showing a manner of molding a seal member according to the embodiment of the invention. FIG. 5 is a partially cutaway perspective view schematically showing a state after molding of the seal member according to the embodiment of the invention.

### <<Step of forming leakage preventing portions>>

In the embodiment, the leakage preventing portions 31, 32, 33, and 34 are formed at the portions disposed in the mold (described below) of the three FPCs 21, 22, and 23 laid on each other while displaced from each other. The step of forming the leakage preventing portions 31, 32, 33, and 34 will be described with reference especially to FIGS. 2 and 3.

If the FPCs 21, 22, and 23 laid on each other while displaced from each other are disposed as they are in the mold and mold matching is performed, gaps connecting the cavity and an outside of the mold are formed as described in the description of the art. Therefore, in the embodiment, the leakage preventing portions 31, 32, 33, and 34 for filling the portions where the gaps are formed are formed before the FPCs 21, 22, and 23 are disposed in the mold.

In other words, in the embodiment, the leakage preventing portions 31, 32, 33, and 34 are formed respectively at a portion (a portion in the longitudinal direction of the FPCs) of the gap between the FPC 21 and the FPC 23, a portion (a portion in the longitudinal direction of the FPCs) of a surface of the FPC 23 protruding away from the FPC 21, and a portion (a portion in the longitudinal direction of the FPCs) of a surface of the FPC 22 protruding away from the FPC 23. To put it more concretely, the parenthesized "a portion in the longitudinal direction of the FPCs" is portions in the longitudinal direction of the FPCs 21, 22, and 23 and including areas housed in the mold in molding the seal member (see FIG. 4 described below).

The leakage preventing portion 31 out of these leakage preventing portions corresponds to the portion of the above gap X1 shown in FIG. 10 and the leakage preventing portions 32, 33, and 34 respectively correspond to steps X2, X3, and X4 shown in FIG. 10.

In the embodiment, first, a material having adhesiveness is respectively applied to the portions of the FPCs 21, 22, and 23 where the leakage preventing portions are to be formed. Then, by curing the material while holding the FPCs 21, 22, and 23 with the preforming mold 40, the leakage preventing portions 31, 32, 33, and 34 are formed. As preferable examples of the material having the adhesiveness, epoxy resin and dope cement prepared by dissolving resin in a solvent may be used as well as a material (rubber material) having similar characteristics as a material of the seal member described below. A method for curing the material having adhesiveness can be selected suitably according to the characteristics of the material. For example, a material having a thermosetting property can be cured by heating, a material having an ultraviolet curing property can be cured by ultraviolet irradiation, a material having such a property as to be cured when an additive is added can be cured by adding the additive, and a material that is cured at room temperature and atmospheric pressure can be cured by leaving the material for a certain or longer time. Alternatively, it is possible to form the leakage preventing portions 31, 32, 33, and 34 by sticking film-like members such as resin films to the FPCs 21, 22, and 23.

The preforming mold 40 according to the embodiment is made up of a preforming lower mold 41 and a preforming upper mold 42. The preforming lower mold 41 and the preforming upper mold 42 are formed by respectively forming a groove 41a and a groove 42a in members in shapes of flat plates. When the preforming lower mold 41 and the preforming upper mold 42 are mated, a through hole having a rectangular section is formed by the grooves 41a and 42a. The FPCs 21, 22, and 23 are held by the preforming mold 40 so that the portions of the FPCs 21, 22, and 23 laid on each other where the material having adhesiveness is applied are housed in the through hole (see FIG. 3). Then, after the material is cured, the FPCs 21, 22, and 23 on which the leakage preventing portions 31, 32, 33, and 34 are formed are taken out of the preforming mold 40.

As is clear from FIG. 3, a sectional shape (a shape formed by putting the sections of the FPCs 21, 22, and 23 and the sections of the leakage preventing portions 31, 32, 33, and 34 together) in a direction perpendicular to the longitudinal direction of the FPCs at the portions where the leakage preventing portions 31, 32, 33, and 34 are formed is a rectangle. The shape and dimensions of the rectangular section are equal to a shape and dimensions of a section of a through hole which is formed in a mold for molding the seal member (described below) and through which the FPCs are to be inserted (disposed).

### «Step of molding seal member»

The seal member 11 is molded after the leakage preventing portions 31, 32, 33, and 34 are formed. This molding step will be described with reference especially to FIGS. 4 and 5. The metal mold 50 for molding the seal member 11 includes a lower mold 51 and an upper mold 52. Grooves 51a and 52a in which the FPCs 21, 22, and 23 are to be disposed are respectively formed in the lower mold 51 and the upper mold 52. If mold matching is performed after the FPCs 21, 22, and 23 are disposed, the FPCs 21, 22, and 23 penetrate a cavity C for molding the seal member 11. FIG. 4 shows the state in which the FPCs 21, 22, and 23 are disposed in the lower mold 51 before the mold matching is performed (before the upper mold 52 comes in contact with the lower mold 51).

If the mold matching is performed, the groove 51a formed in the lower mold 51 and the groove 52a formed in the upper mold 52 form the rectangular through hole. The FPCs 21, 22, and 23 are inserted through the through hole.

Here, in the embodiment, the mold matching is performed so that the leakage preventing portions 31, 32, 33, and 34 are fitted in the through hole formed by the grooves 51a and 52a. In this way, the through hole is completely closed with the leakage preventing portions 31, 32, 33, and34. Therefore, it is possible to eliminate the gaps through which the cavity C communicates with the outside in the mold clamping. After the mold clamping, the seal material (here, the rubber material) is charged into the cavity C. After the seal material is cured, the mold is opened and the molded article is taken out. The molding in this step is carried out by means of normal insert molding which is a known technique and therefore will not be described in detail.

FIG. 5 shows a state in which the seal member 11 is molded. Needless to say, the seal member 12 is molded similarly.

### <Excellent points of the seal manufacturing method according to the embodiment>

With the manufacturing method of the seal 100 according to the embodiment, it is possible to suppress the leakage of the seal material from the cavity C when the seal material is charged into the cavity C. As a result, it is possible to suppress generation of the burrs. In this way, it is possible to save time and trouble to remove the burrs and improper charging of the seal material can be suppressed.

Moreover, it is unnecessary to provide steps that fit the steps of the FPCs to the grooves 51a and 52a respectively formed in the lower mold 51 and the upper mold 52. Therefore, sectional shapes of the grooves 51a and 52a may be simple rectangles and it is possible to easily form the grooves 51a and 52a with high dimensional accuracy.

### <Others>

In the case described in the above embodiment, the leakage preventing portions are formed in and at the gaps and steps formed by laying the three FPCs while displacing them from each other. However, even if there is only one FPC, its surface may be uneven due to gaps and steps, which may cause the leakage of the seal material. Therefore, in this case, generation of burrs can be suppressed as well by forming leakage preventing portions in advance similarly to the method shown in the above embodiment. This point will be described with reference to FIG. 6. FIG. 6 is a schematic sectional view of the conducting member showing a state in which leakage preventing portions are formed when a surface of a conducting member (FPC) is uneven.

The FPC 24 shown in FIG. 6 has recessed portions 24a and 24b in the surface on a flat face side and the surface on a side face side, respectively. These recessed portions 24a and 24b cause the leakage of the seal material similarly to the gaps and the steps formed by the three FPCs laid on each other while displaced from each other. Therefore, by forming the leakage preventing portions 35 and 36 in the recessed portions 24a and 24b in advance by a method similar to the above leakage preventing portion forming step, it is possible to suppress the leakage of the seal material in molding the seal member.

In the above description, the seal provided to the flip phone is described as an example of the seal manufactured by the manufacturing method according to the embodiment. However, it is of course possible to apply the seal to seals provided to other devices. For example, it is possible to apply the seal to seals provided to mobile devices such as a camcorder, a PDA, and a notebook computer and various devices such as devices provided with a fuel cell gasket having FPCs.

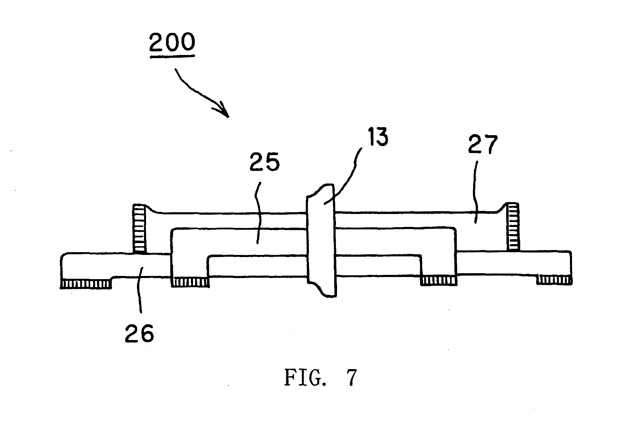

One of the applications will be described with reference to FIG. 7. FIG. 7 is a plan view of a seal integrally provided with the conducting members (FPCs) according to the embodiment of the invention. The normal gasket has been described as an example of the seal member in the above embodiment, and a case in which the seal member is a grommet will be described here. The seal 200 shown in FIG. 7 includes the grommet 13 as the seal member and the three FPCs 25, 26, and 27. The grommet 13 has a sound insulation property as well as a sealing property. In the case of this seal 200, it is possible to prevent leakage of molding a material as well in molding the grommet 13 by molding the grommet 13 after forming leakage preventing portions in advance on the three FPCs 25, 26, and 27 laid on each other while displaced from each other.

In recent years, compact communication devices including cell phones and other devices are differentiated in various ways as a user base grows. Therefore, qualities such as shock resistance and a waterproof property are improved, various functions become diversified, and miniaturization advances. As a result, conducting members such as FPCs through which electricity is passed have more complicated shapes or become multilayered. Consequently, demands for the seals are growing and it is possible to suitably meet the demands by using the manufacturing method according to the embodiment as described above.

Although the FPC has been described as an example of the conducting member in the above description, the invention is not limited to the FPC and may also be applied to an FFC, for example.

## Claims

1. A method for manufacturing a seal integrally provided with conducting members by charging a seal material into a cavity in a mold with the flexible flat conducting members disposed in the mold, the plurality of conducting members laid on each other while displaced from each other,
wherein a leakage preventing portion for preventing leakage of the seal material from the cavity is formed in a portion of a gap formed between the conducting members not adjacent to each other before the conducting members are disposed in the mold.

2. A method for manufacturing a seal integrally provided with conducting members by charging a seal material into a cavity in a mold with the flexible flat conducting members disposed in the mold, the plurality of conducting members laid on each other while displaced from each other,
wherein a leakage preventing portion for preventing leakage of the seal material from the cavity is formed at a portion of a surface of a portion of the given conducting member protruding away from any other conducting member before the conducting members are disposed in the mold.

3. A method for manufacturing a seal integrally provided with conducting members by charging a seal material into a cavity in a mold with the flexible flat conducting members disposed in the mold, the plurality of conducting members laid on each other while displaced from each other,
wherein leakage preventing portions for preventing leakage of the seal material from the cavity are respectively formed in a portion of a gap formed between the conducting members not adjacent to each other and at a portion of a surface of a portion of the given conducting member protruding away from any other conducting member before the conducting members are disposed in the mold and
a shape formed by putting sections of the conducting members laid on each other and sections of the leakage preventing portions together in a direction perpendicular to a longitudinal direction of the conducting members is a rectangle.

4. A method for manufacturing a seal integrally provided with a conducting member by charging a seal material into a cavity in a mold with the flexible flat conducting members disposed in the mold, the conducting member having an uneven surface,
wherein a leakage preventing portion for preventing leakage of the seal material from the cavity is formed at a portion of a surface of the conducting member before the conducting member is disposed in the mold.
